(19) Europäisches Patentamt

European Patent Office

Office européen des brevets

(11) **EP 1 171 515 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(21) Anmeldenummer: **00926802.0**

(22) Anmeldetag: **04.04.2000**

(51) Int Cl.⁷: **C08J 9/00**, C08G 18/10

(86) Internationale Anmeldenummer:
**PCT/EP00/02977**

(87) Internationale Veröffentlichungsnummer:
**WO 00/063279 (26.10.2000 Gazette 2000/43)**

(54) **ZELLIGE POLYISOCYANAT-POLYADDITIONSPRODUKTE**

CELLULAR POLYISOCYANATE-POLYADDITION PRODUCTS

PRODUITS CELLULAIRES DE POLYADDITION DE POLYISOCYANATE

(84) Benannte Vertragsstaaten:
**DE ES FR GB IT SE**

(30) Priorität: **15.04.1999 DE 19916972**

(43) Veröffentlichungstag der Anmeldung:
**16.01.2002 Patentblatt 2002/03**

(73) Patentinhaber: **BASF AKTIENGESELLSCHAFT
67056 Ludwigshafen (DE)**

(72) Erfinder:
• **BOLLMANN, Heinz
  D-49594 Alfhausen (DE)**
• **SCHOLZ, Wolfgang
  D-49448 Lemförde (DE)**
• **JESCHKE, Torsten
  D-49152 Wimmer (DE)**
• **NICHAU, Ute
  D-48480 Lünne (DE)**
• **KRIESMANN, Arne
  D-49448 Lemförde (DE)**
• **STRAUSS, Michael
  D-49448 Lemförde (DE)**

(56) Entgegenhaltungen:
EP-A- 0 036 994          DE-A- 2 615 804
DE-A- 19 534 163        US-A- 3 594 334

**Beschreibung**

Die Erfindung betrifft Verfahren zur Herstellung von zelligen Polyisocyanat-Polyadditionsprodukten in einer Form, bevorzugt zelligen Polyurethanelastomeren, besonders bevorzugt von solchen mit einer Dichte nach DIN 53420 von 200 bis 1100, bevorzugt 300 bis 800 kg/m$^3$, einer Zugfestigkeit nach DIN 53571 von $\geq$ 3,5, bevorzugt 4 bis 5,8 N/mm$^2$, einer Dehnung nach DIN 53571 von $\geq$ 350, bevorzugt 410 bis 500 % und einer Weiterreißfestigkeit nach DIN 53515 von $\geq$ 12, bevorzugt 13 bis 19 N/mm und insbesondere einem Druckverformungsrest (bei 80°C) in Anlehnung an DIN 53572 von 5 kleiner 25 %, bevorzugt 10 bis 23 %.

Des weiteren bezieht sich die Erfindung auf derart erhältliche zellige Polyisocyanat-Polyadditionsprodukte und deren Verwendung.

Zellige, beispielsweise mikrozellige Polyisocyanat-Polyadditionsprodukte, üblicherweise Polyurethane und/oder Polyisocyanurate, erhältlich durch Umsetzung von Isocyanaten mit gegenüber Isocyanaten reaktiven Verbindungen sowie Verfahren zu ihrer Herstellung sind allgemein bekannt. Eine besondere Ausgestaltung dieser Produkte sind zellige, insbesondere mikrozellige Polyurethanelastomere, die sich von üblichen Polyurethanschaumstoffen durch ihre wesentlich höhere Dichte von 300 bis 600 kg/m$^3$, ihre besonderen physikalischen Eigenschaften und die dadurch bedingten Anwendungsmöglichkeiten unterscheiden. Derartige Polyurethanelastomere finden beispielsweise Anwendung als schwingungs- und stoßdämpfende Elemente, insbesondere im Automobilbau. Die aus Polyurethanelastomeren hergestellten Federungselemente werden in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben. Bei dieser Anordnung besteht die Gefahr des Eindringens von Wasser in die Porenstruktur des Polyurethanelastomers. Neben einer nachteiligen Materialverhärtung werden durch diese Wasseraufnahme unerwünschte Korrosions- und Abrieberscheinungen hervorgerufen.

Zusätzlich zu dieser Verschlechterung der Materialeigenschaften kann bereits eine geringe Aufnahme von Wasser zu einer chemischen Beeinträchtigung des Elastomers führen. Daher ist für die Langzeittauglichkeit solcher Polyurethanelastomere sowohl deren Wasserdichtheit als auch eine möglichst gute chemische Stabilisierung gegen eine Umsetzung mit Wasser von großer Bedeutung.

Weitere Anforderungen an die zelligen Polyisocyanat-Polyadditionsprodukte bestehen in der Erreichung exzellenter dynamischmechanischer und statisch-mechanischer Eigenschaften, beispielsweise von hervorragenden Zugfestigkeiten, Dehnungen, Weiterreißfestigkeiten und Druckverformungsresten, damit insbesondere die Polyurethanelastomere die hohen mechanischen Anforderungen, die an die Dämpfungselemente gestellt werden, über einen möglichst langen Zeitraum erfüllen können. Die zelligen Polyisocyanat-Polyadditionsprodukte werden in einer Form hergestellt. Hinsichtlich der Wirtschaftlichkeit dieses aufwendigen Verfahrens ist zudem eine Beschleunigung des Verfahrens durch eine kürzerer Verweildauer der Reaktionsmischung bzw. des Elastomeren in der Form wünschenswert.

Nach EP-A 62 835 werden geschlossenzellige Polyurethanformteile mit einer verdichteten Randzone beschrieben, die durch Umsetzung eines isocyanatterminierten Prepolymers mit Wasser in einem Formwerkzeug mit einer Oberflächentemperatur der Forminnenwand von 50 bis 70°C erhältlich sind. Die Formteile sind beispielsweise als Dämpfungselemente im Automobilbau verwendbar. Die für diese Formteile beschriebene geringe Wasseraufnahme resultiert vor allem aus der verdichteten Randzone. Eine nachträgliche mechanische Bearbeitung der Teile beispielsweise durch Schneiden oder Abdrehen kann diese Randzone beschädigen oder zerstören und eine Wasseraufnahme ermöglichen. Zudem ist eine kürzere Entformzeit wünschenswert.

In EP-A 36 994 werden wasserdichte, feinzellige Polyurethanelastomere offenbart, die in Gegenwart von Polysiloxanen hergestellt werden. Nachteilig an dieser technischen Lehre sind die weiterhin erhebliche Wasseraufnahme derartig hergestellter Formkörper, deren geringe Stabilisierung gegen einen chemischen Abbau der Elastomermatrix durch Wasser und insbesondere die langen Herstellungsintervalle in der Form.

EP-A 250 969 beschreibt die Herstellung von Polyurethanelastomeren. wobei als Emulgator statt der sulfonierten Rizinolsäure ein Polysiloxan-Ionomer eingesetzt wird. Dieses Polysiloxan-Ionomer ist gemäß EP-A 250 969 erhältlich durch Umsetzung eines Polysiloxans, das gegenüber Isocyanaten reaktive Gruppe aufweist, mit einem Überschuß an Isocyanaten und anschließende Reaktion des Isocyanatgruppen-aufweisenden Umsetzungsproduktes mit einem Salz oder einer salzformenden Gruppe. Nachteilig an dieser technischen Lehre ist sowohl die aufwendige Herstellung des Polysiloxan-Ionomers als auch die geringe Kompatibilität mit anderen Emulgatoren in der Vernetzerkomponente. So wird gemäß EP-A 250 969 die bevorzugt einzusetzende sulfonierte Rizinoisäure als Emulgator durch das Polysiloxan-Ionomer ersetzt.

In DE-A 195 48 770 und DE-A 195 48 771 werden mikrozelluläre, 5 harnstoffgruppenhaltige Polyurethanelastomere erhältlich durch Umsetzung eines NCO-gruppenhaltigen Prepolymeren bei einer Formtemperatur von 90°C mit einem Vernetzergemisch, das sulfoniertes Rizinusöl und Silikonöl enthält, beschrieben. Zwar sind gemäß dieser technischen Lehre Elastomere mit sehr guten mechanischen und dynamischen Eigenschaften zugänglich, allerdings genügt die Tendenz der Formteile zur Wasseraufnahme nicht allerhöchsten Ansprüchen. Das Problem, das der vorliegenden Erfindung zugrunde liegt, nämlich die Wasseraufnahme der Elastomere zu vermindern, wird weder in der DE-A 195 48 770 noch in der DE-A 195 48 771 adressiert. Der Fachmann, der sich dieses Problem stellte, bekommt mit keiner dieser Schriften eine technische Lehre zur Lösung dieses Problems zur Verfügung gestellt.

Die technischen Lehren der zitierten Schriften weisen insgesamt den Nachteil auf, daß die derartig hergestellten Polyurethanelastomere höchsten Anforderungen nicht gerecht wird. Eine weitere Reduzierung der Wasseraufnahme ist wünschenswert. Zudem sollte bei insgesamt möglichst verbesserten mechanischen Eigenschaften der Formteile der Herstellungsprozeß beschleunigt, insbesondere die Verweilzeit in der Form verringert und außerdem die Stabilität der Polyurethanmatrix auch gegenüber geringen Mengen von Wasser verbessert werden.

Aufgabe der Erfindung war es somit, zellige, bevorzugt geschlossenzellige Polyisocyanat-Polyadditionsprodukte, bevorzugt zellige Polyurethanelastomere mit einer Dichte von 200 bis 1100, bevorzugt 300 bis 800 kg/m$^3$ und verbesserten Eigenschaften zu entwickeln. Insbesondere sollten die Zugfestigkeit nach DIN 53571, die Dehnung nach DIN 53571, die Weiterreißfestigkeit nach DIN 53515 und/oder der Druckverformungsrest (bei 80°C) in Anlehnung an DIN 53572 verbessert werden. Des weiteren sollte die Wasseraufnahme dieser Produkte vermindert und das Herstellverfahren hinsichtlich einer kürzeren Belegung der Form schneller und wirtschaftlicher gestaltet werden, ohne daß ein solches wirtschaftlicheres Verfahren zu Nachteilen in den Eigenschaften der Produkte führt. Außerdem sollte die Stabilität der Produkte gegenüber geringen Mengen an Wasser verbessert werden.

Die Aufgabe konnte dadurch gelöst werden, daß man die Herstellung der zelligen Polyisocyanat-Polyadditionsprodukten, bevorzugt der mikrozelligen Polyurethanelastomere, in einer Form in Gegenwart von Polysiloxanen und ≤ 1, bevorzugt 0 bis 0,9 Gew.-% sulfonierten Fettsäuren, bezogen auf das Gewicht der zelligen Polyisocyanat-Polyadditionsprodukte, bei einer Oberflächentemperatur der Forminnenwand von 75 bis 90°C durchführt.

Unter dem Begriff "Oberflächentemperatur der Forminnenwand" ist die Temperatur zu verstehen, die die Oberfläche der Innenwand der Form, d.h. die Oberfläche der Form, die üblicherweise mit dem Reaktionssystem bei der Herstellung der Formteile in Kontakt steht, bei der Herstellung der Formteile zumindestens kurzzeitig, bevorzugt mindestens 10 min, aufweist.

Als Polysiloxane können allgemein bekannte Verbindungen eingesetzt werden, beispielsweise Polymethylsiloxane, Polydimethylsiloxane und/oder Polyoxyalkylen-Silikon-Copolymere. Beispielsweise kommen Verbindungen der folgenden allgemeinen Strukturformel in Betracht:

$$\text{XYZSi-O- [SiXY-O-]}_n\text{-SiXYZ}$$

mit

X:    -CH$_3$, -CH$_2$CH$_3$, -[CH$_2$CH$_2$-O-]$_m$-CH$_2$-CH$_2$-OH;

Y:    -CH$_3$, -CH$_2$CH$_3$, -[CH$_2$CH$_2$-O-]$_m$-CH$_2$-CH$_2$-OH;

Z:    -OH, -R-OH, -R-SH, -R-NH-R, -[CH$_2$CH$_2$-O-]$_m$-CH$_2$-CH$_2$-OH;

n:    1 bis 100;

m:    0 bis 100;

R:    Alkyl, Alkylen, -0-Alkylen, -S-Alkylen, -NH-Alkylen mit jeweils 1 bis 20 Kohlenstoffatomen im Alkylrest.

Bevorzugt weisen die Polysiloxane eine Viskosität bei 25°C von 20 bis 2000 MPas auf.

Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt.

Die Menge an sulfonierten Fettsäuren sollte nicht über den erfindungswesentlichen Bereichen hinausgehen, da insbesondere die deutlich verbesserte, d.h. geringer Wasseraufnahme der Formkörper mit einer größeren Menge dieses Emulgators nicht erreicht wird. Diese technische Lehre wird durch keine der Schriften des Standes der Technik beschrieben oder nahegelegt. Sollten aufgrund des Einsatzes weiterer Verbindungen in der Vernetzerkomponente, die nachfolgend beschrieben wird, beispielsweise Hydrolyseschutzmittel, z.B. Carbodiimide, für eine ausreichende Homogenisierung dieser Vernetzerkomponente weitere Mengen an Emulgatoren erforderlich sein, so können über die erfindungsgemäße Menge an sulfonierten Fettsäuren hinaus oder als vollständiger Ersatz der sulfonierten Fettsäuren beispielsweise weitere allgemein bekannte 5 Emulgatoren eingesetzt werden, z.B. Polyglykolester von Fettsäuren, Alkoxylate von Fettsäuren, bevorzugt Polyethylenglykolester, Polypropylenglykolester, Polyethylenpolypropylenglykolester, Ethoxylate und/oder Propoxylate der Linolsäure, Linolensäure, Ölsäure, Arachidonsäure, besonders bevorzugt ölsäureethoxylate.

Die sulfonierten Fettsäuren können bevorzugt als wässrige Lösungen, beispielsweise als 50 %-ige wässrige Lösungen eingesetzt werden. Die in dieser Schrift dargestellten Mengenangaben in Bezug auf die sulfonierten Fettsäuren beziehen sich grundsätzlich auf der Gewicht der sulfonierten Fettsäuren ohne Wasser.

Die erfindungsgemäßen zelligen Polyisocyanat-Polyadditionsprodukte weisen bevorzugt eine Dichte nach DIN 53420 von 200 bis 1100, bevorzugt 300 bis 800 kg/m$^3$, eine Zugfestigkeit nach DIN 53571 von größer 3,5 N/mm$^2$,

eine Dehnung nach DIN 53571 von größer 350 %, eine Weiterreißfestigkeit nach DIN 53515 von größer 12 N/mm und besonders bevorzugt einen Druckverformungsrest (bei 80°C) in Anlehnung an DIN 53572 von kleiner 25 % auf.

Besonders bevorzugt beträgt die Wasseraufnahme der zelligen Polyisocyanat-Polyadditionsprodukte ohne Außenhaut, d.h. nach Entfernung der weitgehend kompakten Außenhaut, kleiner 15, bevorzugt kleiner 10 Gew.-%, bezogen auf das Gewicht des Polyisocyanat-Polyadditionsproduktes.

Verwendung finden die erfindungsgemäßen zelligen Polyisocyanat-Polyadditionsprodukte, im Folgenden auch als "Formkörper" bezeichnet, als Dämpfungselemente im Fahrzeugbau, beispielsweise im Automobilbau, z.B. als Zusatzfedern, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker und/oder als auf der Felge befindliches Notrad, das beispielsweise bei einem Reifenschaden bewirkt, daß das Fahrzeug auf dem zelligen Polyisocyanat-Polyadditionsprodukt fährt und steuerbar bleibt.

Die erfindungsgemäßen Formkörper, d.h. die zelligen Polyisocyanat-Polyadditionsprodukte, bevorzugt die mikrozelligen Polyurethanelastomere, weisen demnach nicht nur exzellente mechanische und dynamische Eigenschaften auf, insbesondere die Wasseraufnahme konnte wie gewünscht erfindungsgemäß deutlich erniedrigt werden. Insbesondere diese Kombination besonders vorteilhafter Eigenschaften ist aus dem Stand der Technik nicht bekannt.

Die Herstellung kann unter Berücksichtigung der erfindungsgemäßen 5 Merkmale nach ansonsten allgemein bekannten Verfahren erfolgen, beispielsweise indem man in einem ein- oder zweistufigen Prozeß die folgenden Ausgangsstoffe einsetzt:

(a) Isocyanat,
(b) gegenüber Isocyanaten reaktive Verbindungen,
(c) die bereits beschriebenen Polysiloxane,
(d) 0 bis 1, bevorzugt 0 bis 0,9 Gew.-% der bereits dargestellten Fettsäuresulfonate, bezogen auf das Gewicht der zelligen Polyisocyanat-Polyadditionsprodukte
5 (e) Wasser und gegebenenfalls
(f) Katalysatoren,
(g) Treibmittel und/oder
(h) Hilfs- und/oder Zusatzstoffe.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden. Die Oberflächentemperatur der Forminnenwand beträgt erfindungsgemäß 75 bis 90°C.

Die Formteile sind nach 10 bis 40 Minuten ausgehärtet und damit entformbar.

Die Menge des in das Formwerkzeug eingebrachten Reaktionsgemisches wird üblicherweise so bemessen, daß die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die erfindungsgemäßen zelligen Polyisocyanat-Polyadditionsprodukte werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D. J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozeß zunächst ein NCO-gruppenhaltiges Prepolymeres hergestellt. Dazu wird die Komponente (b) mit (a) im Überschuß üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die erfindungsgemäße Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend (d) und (e) umsetzt, wobei (c) und gegebenenfalls (f). (g) und/oder (h) in dem Prepolymer und/oder der Vernetzerkomponente enthalten sind.

Die Komponente (c) kann bei dem zweistufigen Verfahren sowohl dem Prepolymeren vor, während und/oder nach seiner Herstellung und/oder der Vernetzerkomponenten zugegeben werden. Bevorzugt erfolgt die Zugabe von (c) über die Vernetzerkomponente.

Die Hilfs- und/oder Zusatzstoffe (h) können bevorzugt in der vernetzerkomponente enthalten sein. Bevorzugt wird als Hilfs- und Zusatzstoffe (h) in der Vernetzerkomponente mindestens ein allgemein bekanntes Carbodiimid als Hydrolyseschutz eingesetzt, beispielsweise 2,2',6,6'-Tetraisopropyldiphenylcarbodiimid.

Zur Verbesserung der Entformung der nach dem erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wäßrigen Seifenlösungen, zu beschichten.

Die Formstandzeiten betragen in Abhängigkeit von der Größe und Geometrie des Formteils durchschnittlich 10 bis 40 Minuten.

Nach der Herstellung der Formteile in der Form können die Form-5 teile bevorzugt für eine Dauer von 1 bis 48 Stunden bei Temperaturen von üblicherweise von 70 bis 120°C getempert werden.

Zu den Ausgangskomponenten enthaltend in dem erfindungsgemäßen Reaktionsgemisch kann folgendes ausgeführt werden:

Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'- und/oder 5 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, Phenylendiisocyanat und/oder (cyclo)aliphatische Isocyanate wie z.B. 1,6-Hexamethylendiisocyanat, 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI) und/oder Mischungen dieser Isocyanate eingesetzt.

Als gegenüber Isocyanaten reaktive Verbindungen (b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 3500. Bevorzugt werden als (b) Polyetherpolyole, Polyesterpolyalkohole und/oder hydroxylgruppenhaltige Polycarbonate eingesetzt.

Bevorzugt werden als (b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 5 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z. B. Ethylenglykol, Diethylenglykol, Butandiol-1,4, Pentandiol-1,5, Hexandiol-1,6, Decandiol-1,10, 0 2-Methylpropan-1,3-diol, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden.

Als Polyesterpolyole vorzugsweise verwendet werden Ethandiolpolyadipate, 1,4-Butandiol-polyadipate, Ethandiol-butandiol-polyadipate. 1,6-Hexandiol-neopentylglykol-polyadipate, 1,6-Hexandiol-1,4-Butandiol-polyadipate, 2-Methyl-1,3-propandiol-1,4-butandiol-polyadipate und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit e-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren niedermolekulare Kettenverlängerungs- und/oder Vernetzungsmitteln (b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel.

Als (b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, 5 Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(b-hydroxyethyl)-hydrochinon oder 1,3-Di(b-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin.

Als höherfunktionelle Vernetzungsmittel (b1) seien beispielsweise tri- und höherfunktionelle Alkohole, wie z. B. Glycerin, Trimethylolpropan, Pentaerythrit und Trihydroxycyclohexane sowie Trialkanolamine, wie z.B. Triethanolamin genannt.

Als Kettenverlängerungsmittel können verwendet werden: alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch 5 zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt werden jedoch keine aromatischen Diamine eingesetzt. Bevorzugt erfolgt die Herstellung der erfindungsgemäßen Produkte somit in Abwesenheit von aromatischen Diaminen.

Erfindungsgemäß wird die Herstellung der zelligen Polyisocyanat-5 Polyadditionsprodukte bevorzugt in Gegenwart von Wasser (e) durchgeführt. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (b) und (g) aufgeführt. Per Definition enthalten die Komponenten (b) und (g) somit kein Wasser, das per Definition ausschließlich als (e) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wässrigen Lösungen der sulfonierten Fettsäuren eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (f) zugefügt werden. Die Katalysatoren (f) können einzeln wie auch in Abmischung miteinander zugegeben werden. Vorzugsweise sind dies metallorganische Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N'',N''-Pentamethyldiethylentriamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-5 Gruppen.

Je nach einzustellender Reaktivität gelangen die Katalysatoren (f) in Mengen von 0,001 bis 0,5 Gew.-%, bezogen auf das Prepolymere, zur Anwendung.

Gegebenenfalls können in der Polyurethanherstellung übliche Treibmittel (g) verwendet werden. Geeignet sind beispielsweise niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (e) als Treibmittel eingesetzt.

Bei der erfindungsgemäßen Herstellung des Formteile können Hilfsund Zusatzstoffe (h) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den erfindungsgemäßen Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnußöl und Zellregler, wie Paraffine und Fettalkohole. Die oberflächenaktiven Substanzen werden üblicherweise in Mengen von 0,01 bis 5 Gew.-Teilen, bezogen auf 100 Gew.-Teile der Komponenten (b) angewandt. Per Definition fallen die erfindungsgemäßen Verbindungen (c) und (d) nicht unter die Hilfs- und Zusatzstoffe (h).

Durch die nachfolgenden Beispiele soll die Erfindung näher erläutert werden.

Beispiel 1

a) Herstellung eines Isocyanatgruppen aufweisenden Prepolymers auf Basis von 1,5-NDI

Eine Mischung aus 1000 Gew.-Teile (0,5 mol) eines Poly(ethandiol(0,5 mol)-butan-1,4-diol (0,5 mol)-adipats (1 mol) mit einem durchschnittlichen Molekulargewicht von 2000 (errechnet aus der experimentell ermittelten Hydroxylzahl) und 1,8 Gew.-Teilen eines Polyethermethylsiloxans wurde auf 140°C erwärmt und bei dieser Temperatur mit 240 Gew.-Teilen (1,14 mol) festem NDI unter intensiven Rühren versetzt und zur Reaktion gebracht.

Man erhielt ein Prepolymer mit einem NCO-Gehalt von 4,12 % und einer Viskosität bei 90°C von 3100 mPas (gemessen mit einem Rotationsviskosimeter).

b) Herstellung zelliger Formkörper

Vernetzerkomponente, die bestand aus

32,0 Gew.-Teilen Wasser,
32,0 Gew.-Teilen 2,2',6,6'-Tetraisopropyldiphenyl-carbodiimid,
40,0 Gew.-Teilen eines Fettsäurepolyglycolesters,
16,0 Gew.-Teilen eines Ölsäureethoxylats

und

0,4 Gew.-Teilen einer Mischung aus
30 Gew.-% Pentamethyl-diethylentriamin und
70 Gew.-% N-Methyl-N'-(dimethylaminoethyl)-piperazin

100 Gew.-Teile des auf 90°C temperierten isocyanatgruppenhaltigen Prepolymers wurden mit 3,2 Gewichtsteilen der auf 50°C temperierten Vernetzerkomponente ca. 10 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 20 Minuten wurde der mikrozelluläre Formkörper entformt und zur thermischen Nachhärtung bei 110°C 16 Stunden getempert.

Beispiel 2

Man verfuhr wie in Beispiel 1. Jedoch bestand nun die Vernetzerkomponente aus

55     Gew.-Teilen einer 50%igen wäßrigen Lösung eines Fettsäuresulfonats
15,8    Gew.-Teilen 2,2',6,6'-Tetraisopropyldiphenyl-carbodiimid
3,5     Gew.-Teilen eines Gemisches von Fettsäurepolyglycolestern und Aminsalzen von Alkylbenzolsulfonaten
13,8    Gew.-Teilen Wasser

und

0,4     Gew.-Teilen einer Mischung aus
30      Gew.-% Pentamethyl-diethylentriamin und
70      Gew.-% N-Methyl-N'-(dimethylaminoethyl)-piperazin

Aus 100 Gew.-Teilen des Prepolymeren nach Beispiel 1a und 1,76 Gew.-Teilen der Vernetzerkomponente nach Beispiel 2 wurden analog der Angaben von Beispiel 1 Formkörper hergestellt.

Beispiel 3

a) Herstellung eines Isocyanatgruppen aufweisenden Prepolymers auf Basis von 1,5-NDI und 4,4'-MDI

Eine Mischung aus 1000 Gew.-Teilen (0,5 mol) eines Po1y(2-methyl-1,3-propandiol (0,5 mol)-butan-1,4-diol (0,5 mol)-adipats (1 mol) mit einem durchschnittlichen Molekulargewicht von 2000 (errechnet aus der experimentell ermittelten Hydroxylzahl) und 0,9 Gew.-Teilen eines Polyethermethylsiloxans wurden auf 140°C erwärmt und bei dieser Temperatur mit 285 Gew.-Teilen (1,14 mol) 4,4'-MDI und 80 Gew.-Teilen (0,38 mol) 1,5-NDI unter intensivem Rühren versetzt und zur Reaktion gebracht. Man erhielt ein Prepolymer mit einem NCO-Gehalt von 6,01 % und einer Viskosität bei 90°C von 2800 mPas (gemessen mit einem Rotationsviskosimeter).

b) Herstellung zelliger Formkörper

Vernetzerkomponente, die bestand aus

55     Gew.-Teilen einer 50%igen wäßrigen Lösung eines Fettsäuresulfonats
15,8    Gew.-Teilen 2,2', 6,6'-Tetraisopropyldiphenyl-carbodiimid
3,5     Gew.-Teilen eines Gemisches von Fettsäurepolyglycolestern und Aminsalzen von Alkylbenzolsulfonaten
3,4     Gew.-Teilen Polyethermethylsiloxan
13,8    Gew.-Teilen Wasser

und

0,4     Gewichtsteilen einer Mischung aus
30      Gew.-% Pentamethyl-diethylentriamin und
70      Gew.-% N-Methyl-N'-(dimethylaminoethyl)-piperazin

100 Gewichtsteile des auf 90°C temperierten isocyanatgruppenhaltigen Prepolymers wurden mit 2,7 Gewichtsteilen der auf 50°C temperierten Vernetzerkomponente ca. 10 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 20 Minuten wurde der mikrozelluläre Formkörper entformt und zur thermischen Nachhärtung bei 110°C 16 Stunden getempert.

Beispiel 4

b) Herstellung zelliger Formkörper

Man verfuhr wie in Beispiel 3. Jedoch bestand die Vernetzerkomponente aus

55 Gew.-Teilen einer 50%igen wäßrigen Lösung eines Fettsäuresulfonats
15,8 Gew.-Teilen 2,2',6,6'-Tetraisopropyldiphenyl-carbodiimid
3,5 Gew.-Teilen eines Gemisches von Fettsäurepolyglycolestern und Aminsalzen von Alkylbenzolsulfonaten
1,7 Gew.-Teilen Polyethermethylsiloxan
13,8 Gew.-Teilen Wasser

und

0,4 Gew.-Teilen einer Mischung aus
30 Gew.-% Pentamethyl-diethylentriamin und
70 Gew.-% N-Methyl-N'-(dimethylaminoethyl)-piperazin

Aus 100 Gew.-Teilen des Prepolymeren nach Beispiel 3a und 2,6 Gew.-Teilen der Vernetzerkomponente nach Beispiel 4 wurden analog der Angaben von Beispiel 3 Formkörper hergestellt.

Beispiel 5

a) Herstellung eines Isocyanatgruppen aufweisenden Prepolymers auf Basis von 1,5-NDI

1000 Gew.-Teile (0,5 mol) eines Poly(ethandiol-adipats) mit einem durchschnittlichen Molekulargewicht von 2000 (errechnet aus der experimentell ermittelten Hydroxylzahl) wurden auf 140°C erwärmt und bei dieser Temperatur mit 240 Gew.-Teilen (1,14 mol) festem NDI unter intensivem Rühren versetzt und zur Reaktion gebracht. Man erhielt ein Prepolymer mit einem NCO-Gehalt von 4,15 % und einer Viskosität bei 90°C von 2600 mPas (gemessen mit einem Rotationsviskosimeter).

b) Herstellung zelliger Formkörper

Vernetzerkomponente, die bestand aus

55 Gew.-Teilen einer 50%igen wäßrigen Lösung eines Fettsäuresulfonats
15,8 Gew.-Teilen 2,2',6,6'-Tetraisopropyldiphenyl-carbodiimid
3,5 Gew.-Teilen eines Gemisches von Fettsäurepolyglycolestern und Aminsalzen von Alkylbenzolsulfonaten
9,9 Gew.-Teilen Polyethermethylsiloxan
13,8 Gew.-Teilen Wasser

und

0,4 Gew.-Teilen einer Mischung aus
30 Gew.-% Pentamethyl-diethylentriamin und
70 Gew.-% N-Methyl-N'-(dimethylaminoethyl)-piperazin

100 Gewichtsteile des auf 90°C temperierten isocyanatgruppenhaltigen Prepolymers wurden mit 2,0 Gewichtsteilen der auf 50°C temperierten Vernetzerkomponente ca. 10 Sekunden lang intensiv gerührt. Die Reaktionsmischung wurde danach in ein 5 auf 80°C temperiertes, verschließbares, metallisches Formwerkzeug eingefüllt, das Formwerkzeug verschlossen und die Reaktionsmischung aushärten gelassen. Nach 20 Minuten wurde der mikrocelluläre Formkörper entformt und zur thermischen Nachhärtung bei 110°C 16 Stunden getempert.

Vergleichsbeispiel I

a) Herstellung eines Isocyanatgruppen aufweisenden Prepolymers auf Basis von 1,5-NDI

1000 Gew.-Teile (0,5 mol) eines Poly(ethandiol-adipats) mit einem durchschnittlichen Molekulargewicht von 2000 (errechnet aus der experimentell ermittelten Hydroxylzahl) wurden auf 140°C erwärmt und bei dieser Temperatur mit 240 Gew.-Teilen (1,14 mol) festem NDI unter intensivem Rühren versetzt und zur Reaktion gebracht.

Man erhielt ein Prepolymer mit einem NCO-Gehalt von 4,07 % und einer Viskosität bei 90°C von 2700 mPas (gemessen mit einem Rotationsviskosimeter).

b) Herstellung zelliger Formkörper

Vernetzerkomponente, die bestand aus:

| | |
|---|---|
| 56 | Gewichtsteilen einer 50%igen wäßrigen Lösung eines Fettsäuresulfonats |
| 12 | Gewichtsteilen einer Mischung aus |
| 75 | Gew.-% Polyethermethylsiloxan und |
| 25 | Gew.-% eines Dicarbonsäureanhydrids |

und

| | |
|---|---|
| 0,4 | Gewichtsteilen einer Mischung aus |
| 30 | Gew.-% Pentamethyl-diethylentriamin und |
| 70 | Gew.-% N-Methyl-N'-(dimethylaminoethyl)-piperazin |

100 Gewichtsteile des auf 90°C temperierten isocyanatgruppenhaltigen Prepolymers wurden mit 2,0 Gewichtsteilen der auf 50°C temperierten Vernetzerkomponente ca. 10 Sekunden lang intensiv gerührt. Die Reaktionsmischung wurde danach in ein auf 60°C temperiertes, verschließbares, metallisches Formwerkzeug eingefüllt, das Formwerkzeug verschlossen und die Reaktionsmischung aushärten gelassen. Nach 30 Minuten wurde der mikrozelluläre Formkörper entformt und zur thermischen Nachhärtung bei 110°C 16 Stunden getempert.

Vergleichsbeispiel II

Man verfuhr wie in Vergleichsbeispiel I. Jedoch bestand die Vernetzerkomponente aus

| | |
|---|---|
| 55 | Gew.-Teilen einer 50%igen wäßrigen Lösung eines Fettsäuresulfonats |
| 15,8 | Gew.-Teilen 2,2',6,6'-Tetraisopropyldiphenyl-carbodiimid |
| 3,5 | Gew.-Teilen eines Gemisches von Fettsäurepolyglycolestern und Aminsalzen von Alkylbenzolsulfonaten |
| 10,1 | Gew.-Teilen Polyethermethylsiloxan |
| 13,8 | Gew.-Teilen Wasser |

und

| | |
|---|---|
| 0,4 | Gew.-Teilen einer Mischung aus |
| 30 | Gew.-% Pentamethyl-diethylentriamin und |
| 70 | Gew.-% N-Methyl-N'-(dimethylaminoethyl)-piperazin |

Aus 100 Gew.-Teilen des Prepolymeren nach Vergleichsbeispiel Ia und 1,94 Gew.-Teilen der Vernetzerkomponente nach Vergleichsbeispiel II wurden analog der Angaben von Vergleichsbeispiel I Formkörper hergestellt.

Vergleichsbeispiel III

Man verfuhr wie in Beispiel 3. Jedoch bestand die Vernetzerkomponente aus

| | |
|---|---|
| 87,5 | Gew.-Teilen einer 50%igen wäßrigen Lösung eines Fettsäuresulfonats |
| 25 | Gew.-Teilen 2,2',6,6'-Tetraisopropyldiphenyl-carbodiimid |
| 8,0 | Gew.-Teilen eines Gemisches von Fettsäurepolyglycolestern und Aminsalzen von Alkylbenzolsulfonaten |
| 1,8 | Gew.-Teilen Polyethermethylsiloxan |

und

| | |
|---|---|
| 0,4 | Gew.-Teilen einer Mischung aus |
| 30 | Gew.-% Pentamethyl-diethylentriamin und |

70      Gew.-% N-Methyl-N'-(dimethylaminoethyl)-piperazin

Aus 100 Gew.-Teilen des Prepolymeren nach Beispiel 3a und 3,4 Gew.-Teilen der Vernetzerkomponente nach Vergleichsbeispiel III wurden analog der Angaben von Beispiel 3 Formkörper hergestellt. Jedoch konnten diese erst nach 30 Minuten entformt werden.

In der Tabelle 1 sind wesentlichen Parameter der verschiedenen erfindungsgemäßen Beispiele und Vergleichsbeispiele gegenübergestellt.

Tabelle 1

| Beispiel | Formtemp. | Polyethermethylsiloxan | Anteil ‚Fettsäuresulfonat (Vernetzer) | Anteil Fettsäuresulfonat (gesamt) |
|---|---|---|---|---|
| Vgl. I | 60°C | im Vernetzer | 40,90 % | 0,79 % |
| Vgl. II | 60°C | im Vernetzer | 28,10 % | 0,54 % |
| Vgl. III | 80°C | im Prepolymer und im Vernetzer | 35,76 % | 1,16 % |
| Bsp. 1 | 80°C | im Prepolymer | - | - |
| Bsp. 2 | 80°C | im Prepolymer | 31,25 % | 0,54 % |
| Bsp. 3 | 80°C | im Prepolymer und im Vernetzer | 30,08 % | 0,78 % |
| Bsp. 4 | 80°C | im Prepolymer und im Vernetzer | 30,65 % | 0,78 % |
| Bsp. 5 | 80°C | im Vernetzer | 28,07 % | 0,54 % |

Die Formkörper wurden unter den im Folgenden dargestellten Bedingungen auf ihre mechanischen und dynamischen Eigenschaften geprüft.

Prüfbedingungen

Die statischen mechanischen Eigenschaften, die Dichte der Prüfkörper betrug jeweils 0,5 g/cm$^3$, wurden anhand der Zugfestigkeit nach DIN 53 571, der Bruchdehnung nach DIN 53 571, der Weiterreißfestigkeit nach DIN 53 515 und dem Druckverformungsrest bei 80°C in Abwandlung zur DIN 53 572 unter Verwendung von 18 mm hohen Abstandsstücken und Prüfkörpern mit einer Grundfläche von 40 x 40 mm und einer Höhe von 30 ± 1 mm gemessen. Die Berechnung des Druckverformungsrestes (DVR) erfolgte nach der Gleichung

$$DVR = [(H_0-H_2)/(H_0-H_1)] * 100 \ [\%]$$

5 in der bedeutet

$H_0$     die ursprüngliche Höhe des Prüfkörpers in mm,
$H_1$     die Höhe des Prüfkörpers in verformtem Zustand in mm,
$H_2$     die Höhe des Prüfkörpers nach der Entspannung in mm.

Die zur Bestimmung der Wasseraufnahme verwendeten Probekörper A wurden aus dem Innern eines Prüfblockes herausgeschnitten. Sie hatten eine Grundfläche von 40 x 40 mm, eine Höhe von 30 mm und eine Dichte von 0,5 g/cm$^3$. Bei Probekörper B handelte es sich um eine zylindrische Prüffeder mit 4 Segmenteinschüben mit einer Höhe von 146 mm, einem Außendurchmesser von 56 mm und einem Innendurchmesser von 10 mm. Zur Bestimmung der Wasseraufnahme wurden die Probekörper auf 0,01 g genau gewogen und in einem Exsikkator vollständig unter Wasser getaucht. Dann wurde der Exsikkator für 3 Minuten einem Vakuum von 250 Torr ausgesetzt. Nach Ablauf dieser Zeit wurde der Normaldruck wieder hergestellt und die Teile wurden für weitere 3 Minuten unter Wasser belassen. Anschließend wurden die Probekörper aus dem Exsikkator entnommen, mit einem Handtuch abgetrocknet und auf 0,01 g genau gewogen. Die Berechnung der Wasseraufnahme (WA) erfolgte nach folgender Gleichung

$$W_A = [W_2 - W_1]/W_1] * 100 \%$$

in der bedeutet

$W_1$     Ausgangsgewicht des Probekörpers

$W_2$     Endgewicht des Probekörpers

Die dynamisch mechanischen Eigenschaften des oben beschriebenen Probekörpers B wurden anhand des Setzbetrages (SB) ermittelt. Dazu wurden die Zusatzfedern auf 100 mm eingefedert und 400000 bei einer Frequenz von 2 Hz mit einem Prüfhub von $\pm$ 40 mm belastet.

Die dynamisch mechanischen Eigenschaften von Probekörper C wurden anhand der Wegzunahme (WZ) bei maximaler Krafteinwirkung und dem Setzbetrag (SB) bestimmt. Der Probekörper C bestand aus einer zylindrischen Prüffeder mit einer Höhe von 100 mm, einem Außendurchmesser von 50 mm und einem Innendurchmesser von 10 mm. Der Probekörper C wurde 100000 Lastwechsel mit einer Kraft von 6 kN und einer Frequenz von 1,2 Hz belastet.

Die Ermittlung der Höhe $H_R$ zur Bestimmung des Setzbetrages nach der dynamischen Prüfung erfolgt nach Aufnahme der Kennlinie der Feder. $H_0$ ist die Ausgangshöhe. Der Formkörper wird 3 x mit maximaler Kraft vorgedrückt. Dann wird im 4. Cyclus die Kennlinie aufgenommen. Die Eindrückgeschwindigkeit beträgt 50 mm/min. Nach 10 Minuten wird $H_1$ bestimmt. Das ist die Höhe des Bauteils nach Aufnahme der Kennlinie. Erst danach startet die dynamische Prüfung.

Nach den dynamisch-mechanischen Prüfungen der Probekörper B bzw. C wurden die Setzbeträge (SB) nach folgender Gleichung ermittelt

$$S_B = [H_O - H_R)/H_O] * 100 \%$$

in der bedeutet

$H_o$     Ausgangshöhe der Prüffeder

$H_R$     Resthöhe der Prüffeder nach der dynamischen Prüfung, gemessen nach 24 h Lagerung bei 23°C und 50 % Luftfeuchtigkeit.

Der Setzbetrag ist ein Maß für die bleibende Verformung des zelligen PU-Elastomeren während des Dauerschwingversuches. Je kleiner dieser Wert ist, desto höher ist die dynamische Leistungsfähigkeit des Materials. Die dynamischen Prüfungen erfolgten ohne zusätzliche Kühlung in einem klimatisierten Raum bei 23°C und 50 % relativer Luftfeuchtigkeit.

Die an den Prüfkörpern ermittelten mechanischen Eigenschaften sind in den folgenden Tabellen zusammengefaßt.

Tabelle 2

| Statische und dynamische mechanische Eigenschaften der zelligen Formkörper gemäß der Vergleichsbeispiele I - III | | | |
|---|---|---|---|
| Vergleichsbeispiel | I | II | III |
| NCO-Gehalt [%] | 4,07 | 4,07 | 6,01 |
| Viskosität 90°C [mPas] | 2700 | 2700 | 2800 |
| Statisch-mechanische Eigenschaften | | | |
| Druckverformungsrest (80°C) [%] | 16,7 | 15,3 | 17,9 |
| Zugfestigkeit [N/mm$^2$] | 3,8 | 3,8 | 4,5 |
| Dehnung [%] | 390 | 408 | 406 |
| Weiterreißfestigkeit [N/mm$^2$] | 11,7 | 11,4 | 13,3 |
| Wasseraufnahme | | | |
| Probekörper A [%] (Mittelwert aus 10 Proben) | 70 | 83 | 25 |
| Probekörper B, vor dynamischer Belastung [%] | 8 | 5 | 60-70 |

Tabelle 2   (fortgesetzt)

| Statische und dynamische mechanische Eigenschaften der zelligen Formkörper gemäß der Vergleichsbeispiele I - III | | | |
|---|---|---|---|
| Vergleichsbeispiel | I | II | III |
| Dynamisch-mechanische Eigenschaften, Probekörper B | | | |
| Setzbetrag [%] | 4-7 | 3-5 | - |
| Dynamisch-mechanische Eigenschaften, Probekörper C | | | |
| Setzbetrag [%] | 5-6 | 6-7 | 8-10 |
| Wegzunahme [mm] | 2-2,5 | 2,5-3,5 | 3,5 |

Tabelle 3

| Statische und dynamische mechanische Eigenschaften der zelligen Formkörper gemäß den Beispielen 1 bis 5 | | | | | |
|---|---|---|---|---|---|
| Beispiel | 1 | 2 | 3 | 4 | 5 |
| NCO-Gehalt [%] | 4,12 | 4,12 | 6,01 | 6,01 | 4,15 |
| Viskosität 90°C [mPas] | 3100 | 3100 | 2800 | 2800 | 2600 |
| Statisch-mechanische Eigenschaften | | | | | |
| Druckverformungsrest (80°C) [%] | 16,8 | 19,5 | 20,9 | 19,4 | 18,9 |
| Zugfestigkeit [N/mm$^2$] | 4,3 | 4 | 4,6 | 4,4 | 5,4 |
| Dehnung [%] | 490 | 410 | 450 | 435 | 420 |
| Weiterreißfestigkeit [N/mm$^2$] | 17,9 | 15,9 | 13,7 | 13,9 | 17,9 |
| Wasseraufnahme | | | | | |
| Probekörper A [%] (Mittelwert aus 10 Proben) | 13 | 3 | 6 | 7 | 5 |
| Probekörper B, vor dynamischer Belastung [%] | 3 | 4 | 6 | 7 | 3 |
| Dynamisch-mechanische Eigenschaften, Probekörper B | | | | | |
| Setzbetrag [%] | 5-7 | 7-8 | 5-9 | 5-9 | 5-9 |
| Dynamisch-mechanische Eigenschaften, Probekörper C | | | | | |
| Setzbetrag [%] | 8,6 | 5-6 | 10-11 | 10-11 | 9,0-11 |
| Wegzunahme [mm] | 1,7 | 1,5-2 | 2,5-3,0 | 2,5-3,0 | 3,0-3,5 |

**Patentansprüche**

1. Verfahren zur Herstellung von zelligen Polyisocyanat-Polyadditionsprodukten in einer Form, **dadurch gekennzeichnet, daß** man die Herstellung in Gegenwart von Polysiloxanen und ≤ 1 Gew.-% Fettsäuresulfonat, bezogen auf das Gewicht der zelligen Polyisocyanat-Polyadditionsprodukte, bei einer Oberflächentemperatur der Forminnenwand von 75 bis 90°C durchführt.

2. Verfahren nach Anspruch 1, **dadurch gekennzeichnet, daß** die zelligen Polyisocyanat-Polyadditionsprodukte eine Dichte nach DIN 53420 von 200 bis 1100 kg/m$^3$, eine Zugfestigkeit nach DIN 53571 von ≥ 4 N/mm$^2$, eine Dehnung nach DIN 53571 von ≥ 400 % und eine Weiterreißfestigkeit nach DIN 53515 von ≥ 12 N/mm aufweisen.

3. Verfahren nach Anspruch 1, **dadurch gekennzeichnet, daß** die zelligen Polyisocyanat-Polyadditionsprodukte ohne Außenhaut eine Wasseraufnahme von kleiner 15 Gew.-%, bezogen auf das Gewicht des Polyisocyanat-Polyadditionsproduktes, aufweisen.

4. Verfahren nach Anspruch 1, **dadurch gekennzeichnet, daß** die Polysiloxane eine Viskosität bei 25°C von 20 bis 2000 MPas aufweisen.

**5.** Verfahren nach Anspruch 1, **dadurch gekennzeichnet, daß** man in einem ein- oder zweistufigen Prozeß die folgenden Ausgangsstoffe einsetzt:

    (a) Isocyanat,
    (b) gegenüber Isocyanaten reaktive Verbindungen,
    (c) Polysiloxane,
    (d) 0 bis 1 Gew.-% Fettsäuresulfonate, bezogen auf das Gewicht der zelligen Polyisocyanat-Polyadditionsprodukte,
    (e) Wasser und gegebenenfalls
    (f) Katalysatoren,
    (g) Treibmittel und/oder
    (h) Hilfs- und/oder Zusatzstoffe.

**6.** Verfahren nach Anspruch 5, **dadurch gekennzeichnet, daß** man in einem zweistufigen Verfahren in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend (d) und (e) umsetzt, wobei (c) und gegebenenfalls (f), (g) und/oder (h) in dem Prepolymer und/oder der Vernetzerkomponente enthalten sein sind.

**7.** Verfahren nach Anspruch 5, **dadurch gekennzeichnet, daß** die Vernetzerkomponente als (h) Carbodiimid enthält.

**8.** Zellige Polyisocyanat-Polyadditionsprodukte mit einer Dichte nach DIN 53420 von 200 bis 1100 kg/m$^3$, einer Zug-festigkeit nach DIN 53571 von größer 3,5 N/mm$^2$, einer Dehnung nach DIN 53571 von größer 350 % und einer Weiterreißfestigkeit nach DIN 53515 von größer 12 N/mm erhältlich durch ein Verfahren gemäß einem der Ansprüche 1 bis 7.

**9.** Zellige Polyisocyanat-Polyadditionsprodukte nach Anspruch 8, die ohne Außenhaut eine Wasseraufnahme von kleiner 15 Gew.-%, bezogen auf das Gewicht des Polyisocyanat-Polyadditionsproduktes, aufweisen.

**10.** Verwendung von zelligen Polyisocyanat-Polyadditionsprodukten nach Anspruch 8 oder 9 als Dämpfungselemente im Fahrzeugbau.

**Claims**

**1.** A process for producing cellular polyisocyanate polyaddition products in a mold, wherein the cellular polyisocyanate polyaddition products are produced in the presence of polysiloxanes and s 1% by weight of fatty acid sulfonate, based on the weight of the cellular polyisocyanate polyaddition products, at a surface temperature of the inner wall of the mold of from 75 to 90°C.

**2.** A process as claimed in claim 1, wherein the cellular polyisocyanate polyaddition products have a density in accordance with DIN 53420 of from 200 to 1100 kg/m$^3$, a tensile strength in accordance with DIN 53571 of $\geq$ 4 N/mm$^2$, an elongation in accordance with DIN 53571 of $\geq$ 400% and a tear propagation resistance in accordance with DIN 53515 of $\geq$ 12 N/mm.

**3.** A process as claimed in claim 1, wherein the cellular polyisocyanate polyaddition products have, without an outer skin, a water absorption of less than 15% by weight, based on the weight of the polyisocyanate polyaddition product.

**4.** A process as claimed in claim 1, wherein the polysiloxanes have a viscosity at 25°C of from 20 to 2000 MPas.

**5.** A process as claimed in claim 1, wherein the following starting materials are used in a single- or two-stage process:

    (a) isocyanate,
    (b) compounds which are reactive toward isocyanates,
    (c) polysiloxanes,
    (d) from 0 to 1% by weight of fatty acid sulfonates, based on the weight of the cellular polyisocyanate polyaddition products,
    (e) water and, if desired,

(f) catalysts,
(g) blowing agents and/or
(h) auxiliaries and/or additives.

**6.** A process as claimed in claim 5, wherein, in a two-stage process, a prepolymer containing isocyanate groups is prepared in the first stage by reacting (a) with (b) and this prepolymer is reacted in the second stage with a crosslinker component comprising (d) and (e) in a mold, where (c) and, if used, (f), (g) and/or (h) are present in the prepolymer and/or the crosslinker component.

**7.** A process as claimed in claim 5, wherein the crosslinker component comprises carbodiimide as (h).

**8.** A cellular polyisocyanate polyaddition product having a density in accordance with DIN 53420 of from 200 to 1100 kg/m$^3$, a tensile strength in accordance with DIN 53571 of greater than 3.5 N/mm$^2$, an elongation in accordance with DIN 53571 of greater than 350% and a tear propagation resistance in accordance with DIN 53515 of greater than 12 N/mm and obtainable by a process as claimed in any of claims 1 to 7.

**9.** A cellular polyisocyanate polyaddition product as claimed in claim 8, which has, without an outer skin, a water absorption of less than 15% by weight, based on the weight of the polyisocyanate polyaddition product.

**10.** The use of a cellular polyisocyanate polyaddition product as claimed in claim 8 or 9 as a damping element in motor vehicle construction.

**Revendications**

**1.** Procédé pour la préparation de produits de polyaddition de polyisocyanates cellulaires dans un moule, **caractérisé en ce qu'**on effectue la préparation en présence de polysiloxanes et de sulfonate d'acides gras à raison de ≤ 1 % en poids, rapporté au poids des produits de polyaddition de polyisocyanates cellulaires, à une température superficielle de la paroi interne du moule de 75 à 90 °C.

**2.** Procédé selon la revendication 1, **caractérisé en ce que** les produits de polyaddition de polyisocyanates cellulaires présentent une densité selon la norme DIN 53420 de 200 à 1100 kg/m$^3$, une résistance à la traction selon la norme DIN 53571 ≥ 4 N/mm$^2$, un allongement selon la norme DIN 53571 ≥ 400 % et une résistance à la propagation des fissures selon la norme DIN 53515 ≥ 12 N/mm.

**3.** Procédé selon la revendication 1, **caractérisé en ce que** les produits de polyaddition de polyisocyanates cellulaires présentent, en l'absence de peau externe, une absorption d'eau inférieure à 15 % en poids, rapportés au poids du produit de polyaddition de polyisocyanate.

**4.** Procédé selon la revendication 1, **caractérisé en ce que** les polysiloxanes présentent une viscosité à 25 °C de 20 à 2000 MPa.s.

**5.** Procédé selon la revendication 1, **caractérisé en ce qu'**on met en oeuvre, dans un procédé à une seule étape ou à deux étapes, les substances de départ indiquées ci-après :

(a) un isocyanate,
(b) des composés aptes à réagir vis-à-vis d'isocyanates,
(c) des polysiloxanes,
(d) des sulfonates d'acides gras à raison de 0 à 1 % en poids rapporté au poids des produits de polyaddition de polyisocyanates cellulaires,
(e) de l'eau et, le cas échéant,
(f) des catalyseurs,
(g) des agents moussants et/ou
(h) des adjuvants et/ou des additifs.

**6.** Procédé selon la revendication 5, **caractérisé en ce qu'**on prépare, dans un procédé à deux étapes, dans la première étape, par mise en réaction de (a) avec (b), un prépolymère présentant des groupes isocyanates et on fait réagir ce prépolymère dans la deuxième étape dans un moule avec un composant de réticulation contenant (d) et (e), (c) et, le cas échéant, (f), (g) et/ou (h) étant contenus dans le prépolymère et/ou dans le composant de réticulation.

7.  Procédé selon la revendication 5, **caractérisé en ce que** le composant de réticulation contient du carbodiimide à titre de (h).

8.  Produits de polyaddition de polyisocyanates cellulaires présentant une densité selon la norme DIN 53420 de 200 à 1100 kg/m$^3$, une résistance à la traction selon la norme DIN 53571 supérieure à 3,5 N/mm$^2$, un allongement selon la norme DIN 53571 supérieur à 350 % et une résistance à la propagation des fissures selon la norme DIN 53515 supérieure à 12 N/mm, que l'on obtient via un procédé selon l'une quelconque des revendications 1 à 7.

9.  Produits de polyaddition de polyisocyanates cellulaires selon la revendication 8, qui présentent, en l'absence de peau externe, une absorption d'eau inférieure à 15 % en poids, rapportés au poids du produit de polyaddition de polyisocyanate.

10. Utilisation de produits de polyaddition de polyisocyanates cellulaires selon la revendication 8 ou 9 à titre d'éléments d'amortissement dans la construction automobile.